# EUROPÄISCHE PATENTSCHRIFT

(11) **EP 1 089 059 B1**
(45) Veröffentlichungstag und Bekanntmachung des Hinweises auf die Patenterteilung: **26.09.2007**
(21) Anmeldenummer: 00117153.7
(22) Anmeldetag: 10.08.2000
(51) Int. Cl.: G01D 5/347

(54) **Radauswuchtmaschine für ein Kraftfahrzeugrad mit kompaktem Drehwinkelgeber**
Wheel balancing machine for a carwheel with compact angular encoder
Machine d'équilibrage de roue pour une roue de véhicule avec codeur angulaire compact

(30) Priorität: 28.09.1999 DE 19946486; 25.04.2000 DE 10020247
(43) Veröffentlichungstag der Anmeldung: 04.04.2001
(73) Patentinhaber: Snap-on Equipment GmbH, 64319 Pfungstadt (DE)
(72) Erfinder: Rothamel, Karl, 64372 Ober-Ramstadt (DE); Lenhardt, Lorenz, 64347 Griesheim (DE)
(74) Vertreter: Nöth, Heinz

(56) Entgegenhaltungen:
- DE-A- 3 920 627
- US-A- 2 685 083
- US-A- 4 329 645
- US-A- 4 387 299
- US-A- 5 329 121
- US-A- 5 385 045

## Beschreibung

Die Erfindung betrifft eine Radauswuchtmaschine für ein auszuwuchtendes Kraftfahrzeugrad nach dem Oberbegriff des Patentanspruches 1.

Eine derartige Auswuchtmaschine ist aus US-A-4,457,172 bekannt. Bei der bekannten Radauswuchtmaschine werden Drehwinkelinkremente des Drehwinkelgebers auf einer drehfest mit der Hauptwelle der Radauswuchtmaschine verbundenen Scheibe angeordnet. Hierdurch entsteht ein relativ hoher Platzbedarf für den Drehwinkelgeber.

Ein aus US-A-5,329,121 bekannter Drehwinkelgeber besitzt in Form eines massiven scheibenförmigen Drehteils einen Polygonspiegel, an dessen Umfang reflektierende Flächen als Reflektoren angeordnet sind. Dieser Polygonspiegel ist an einer rotierenden Welle zu befestigen. Ein Emitter sendet einen Lichtstrahl in Richtung auf die Reflektoren, von denen das ausgesendete Licht in Richtung zu einem Detektor reflektiert wird. An den Detektor ist eine Auswerteschaltung angeschlossen, welche die Detektorsignale für eine Drehwinkelerkennung auswertet.

Bei dem aus US-A-2,685,083 bekannten Drehwinkelgeber sind die am Emitter und Detektor vorbeigeführten Reflektoren am Umfang einer massiven Scheibe angeordnet, welche an einer Welle mit bedeutend geringerem Durchmesser befestigt ist.

Bei einem aus US-A-4,387,299 bekannten Drehwinkelgeber sind die reflektierend ausgebildeten Drehwinkelinkremente an Stegen angeordnet, die an den Umfang eines konusförmigen Teils angeformt sind.

Bei einem weiteren bekannten Drehwinkelgeber (Ram S. Krishnan et al, A Miniature Surface Mount Reflective Optical Shaft Encoder, Hewlett-Packard Journal, Dezember 1996, Seiten 1 bis 6) sind die Reflektoren zur Beibehaltung ihrer ebenen reflektierenden Flächen kreisringförmig auf einer Seite einer fest mit dem Rotor, insbesondere einer Welle verbundenen Scheibe um die Drehachse der Scheibe und des Rotors angeordnet. Hieraus resultiert ein zusätzlicher Vorrichtungsaufwand und Raumbedarf für eine funktionsgerechte Anordnung der Reflektoren gegenüber dem Emitter und dem Detektor bzw. den Detektoren, da die reflektierenden Flächen sich in einer Ebene senkrecht zur Rotationsachse erstrecken.

### [Aufgabe der Erfindung]

Aufgabe der Erfindung ist es eine Radauswuchtmaschine der eingangsgenannten Art zu schaffen, bei welcher für den Drehwinkelgeber ein verringerter Vorrichtungsaufwand und Platzbedarf erforderlich ist.

Diese Aufgabe wird erfindungsgemäß durch die Merkmale des Patentanspruches 1 gelöst.

Bei der Erfindung sind die Reflektoren, welche von reflektierenden Flächen bzw. Flächenabschnitten gebildet sind, am Umfang einer Kreiszylinderfläche der Hauptwelle der Radauswuchtmaschine angeordnet.

Bei der Drehung der Hauptwelle werden die reflektierenden Flächen, welche auf dem Kreisumfang aufeinanderfolgend angeordnet sind, nacheinander durch den vom Emitter vorzugsweise kontinuierlich ausgesendeten Strahl hindurchgeführt. Die reflektierenden Flächen bzw. Flächenabschnitte sind in ihrer Aufeinanderfolge so gestaltet, dass sie diskrete reflektierte Strahlen auf den Detektor richten. Hierdurch erreicht man eine Inkrementierung in Winkelpositionen, welche den jeweiligen reflektierenden Flächenabschnitten entsprechen. Die jeweiligen Flächenabschnitte können unmittelbar aneinander grenzen und ein durchgehendes reflektierendes Band mit die einzelnen Flächenabschnitte unterscheidenden Merkmalen aufweisen. Hierzu können die jeweiligen Flächenabschnitte von der Kreiszylinderform abweichende Flächengestaltungen aufweisen. Es können jedoch auch Kreiszylinderflächen für die jeweiligen Flächenabschnitte verwendet werden, wobei der Radius der jeweiligen Kreiszylinderfläche von dem Radius des Kreises abweichen, den die Kreiszylinderfläche aufweist, auf welcher die Flächenabschnitte angeordnet sind. Der Radius des jeweiligen Flächenabschnittes kann zwischen unendlich, d.h. zwischen einer planen Fläche, und dem Radius der Kreiszylinderfläche, auf welcher die Reflektoren angeordnet sind, liegen. Es ist jedoch auch möglich, dass die Flächenabschnitte einen parabolischen oder elliptischen Querschnitt aufweisen. Ferner können die reflektierenden Flächenabschnitte bezüglich des Emitters bzw. Detektors einen konvexen oder konkaven Verlauf aufweisen. Die reflektierenden Flächenabschnitte sind bei einer ersten Alternative der Erfindung zu an einem flexiblen Band mit einander verbunden, wobei dieses flexible Band um die Kreiszylinderfläche der Hauptwelle der Radauswuchtmaschine geschlungen ist.

Bei einer Ausführungsform sind die Reflektoren an Oberflächen von parallel zur Achse der Hauptwelle verlaufenden Stegen gebildet. Hierzu können die Stege zwischen zwei Materialstreifen angeordnet sein und mit diesen einstückig zu dem Band verbunden sein. Dieses Band besitzt im Bereich der Stege und der Materialstreifen ebene oder gekrümmte Flächen. Beim Biegen des Bandes zum Auflegen auf die Kreiszylinderfläche passen sich die Oberflächen der Materialstreifen der Kreiszylinderform an. Die Stege können jedoch ihre ebenen Flächen beibehalten. Die Breite der Stege, d. h. ihre Ausdehnung in Umfangsrichtung der Kreiszylinderfläche beträgt einen Bruchteil eines Millimeters, beispielsweise ca. 0,3 mm. Beim Umschlingen des Bandes mit den die Reflektoren aufweisenden Stegen um die Hauptwelle erfordert praktisch keinen Raumbedarf, da hierdurch der Durchmesser nur unwesentlich durch die Dicke des Bandes vergrößert wird. Die Reflektoren besitzen gleiche Winkelabstände voneinander. Zur Erzielung eines absoluten Winkelbezuges kann zwischen zwei Reflektoren ein von den übrigen gleichen Winkelabständen abweichender Winkelabstand vorliegen. Hierdurch wird beispielsweise eine Null-Markierung erreicht. Der bei der Erfindung geschaffene Polygonspiegel, dessen Reflektoren (spiegelnde Flächen) am Umfang der Kreiszylinderfläche der Hauptwelle, angeordnet sind, wird bei einer zweiten Alternative der Erfindung von einer starren dünnen Hülse insbesondere Kunststoff gebildet, Die spiegelnden Flächenabschnitte der Reflektoren können durch Metallabscheidung, insbesondere galvanische Metallabscheidung hergestellt sein. Insbesondere kann die Hülse ein Kunststoffspritzteil sein. Da die unmittelbar aneinandergereihten reflektierenden Flächenabschnitte durch den Detektor voneinander unterschieden werden, kann eine durchgehende reflektierende Beschichtung verwendet werden.

In bevorzugter Weise wird der auf die jeweiligen Reflektoren emittierte Strahl (Lichtstrahl) fokussiert, so dass sein Brennpunkt auf der ebenen Fläche des jeweiligen Reflektors liegt. Der vom jeweiligen Reflektor reflektierte Strahl wird während der Drehung, innerhalb der Fläche des jeweiligen Reflektors in Abhängigkeit vom sich ändernden Drehwinkel abgelenkt und kann hierbei von mehreren in Reihe angeordneten Detektoren empfangen werden. Anstelle der mehreren Detektoren, ist es auch möglich, dass ein Detektor mehrere lichtempfindliche Sensoren aufweist, auf die der vom jeweiligen Reflektor abgelenkte reflektierte Strahl während der Drehung nacheinander trifft. Die Detektoren, bzw. Sensoren sind im wesentlichen in Drehrichtung nebeneinander angeordnet. Sie können auch in einer geradlinigen Reihe angeordnet sein. In bevorzugter Weise befinden sie sich jedoch auf einer Kreisbogenform um die Drehachse. Eine Drehrichtungsumkehr kann dadurch erkannt werden, dass der Lichtstrahl auf den Sensor bzw. Detektor länger gerichtet ist, an welchem die Drehrichtungsumkehr erfolgt. Die von den Detektoren bzw. Sensoren abgegebenen Signale werden dementsprechend ausgewertet.

### [Beispiele]

Anhand der Figuren wird an einem Ausführungsbeispiel die Erfindung noch näher erläutert. Es zeigt:

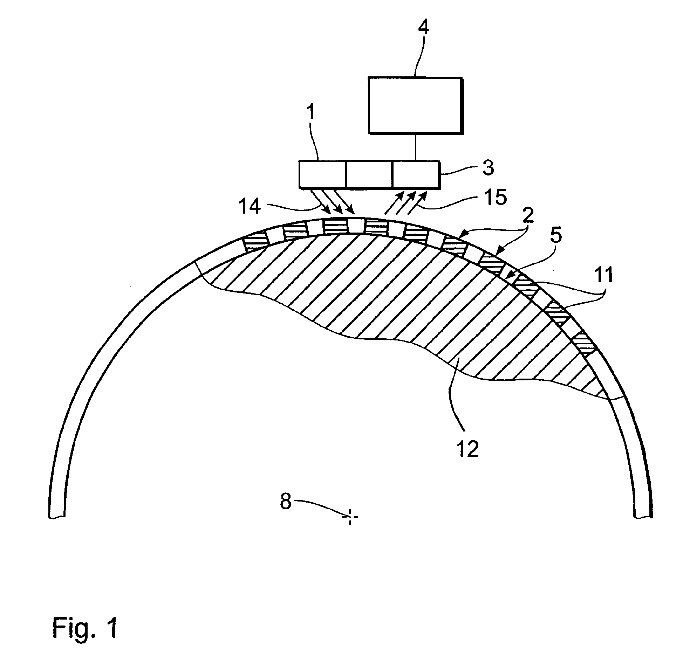

- Figur 1: in schematischer Darstellung ein Ausführungsbeispiel des Drehwinkelgebers, in axialer Richtung gesehen;
- Figur 2: den Drehwinkelgeber senkrecht zur axialen Richtung;
- Figur 3: ein Band mit Reflektoren, welches beim Ausführungsbeispiel verwendet werden kann;
- Figur 4: eine schnittbildliche Darstellung eines zweiten Ausführungsbeispiels;
- Figur 5: einen Detailausschnitt aus dem in Figur 4 dargestellten Ausführungsbeispiel;
- Figur 6: ein drittes Ausführungsbeispiel; und
- Figur 7: ein viertes Ausführungsbeispiel.

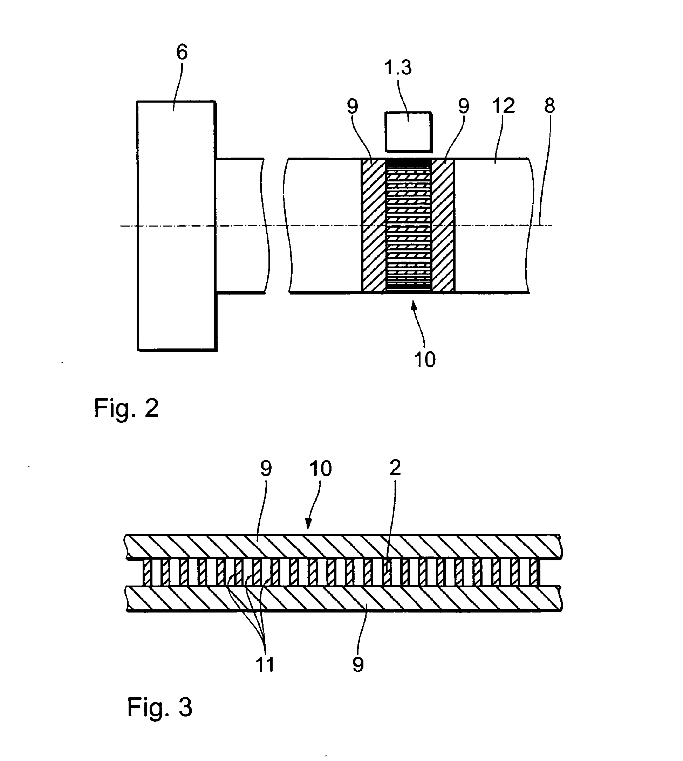

Der in den Figuren dargestellte Drehwinkelgeber besitzt einen Emitter 1, welcher vorzugsweise kontinuierlich Licht in Richtung auf Reflektoren 2 aussendet. Die Reflektoren 2 reflektieren das Licht und das reflektierte Licht wird von einem oder mehreren Detektoren 3 empfangen. Die Reflektoren 2 werden von diskreten reflektierenden Flächen bzw. Flächenabschnitten an einem Band 10 gebildet und befinden sich beispielsweise auf Stegen 11, die zwischen zwei durchgehenden Streifen 9 angeordnet sind (Figur 3). Das Band 10 kann aus Metall, insbesondere Hart-Nickel oder einer metallisierten Kunststoff-Folie bestehen (Figur 3). Die Oberflächen der beiden Streifen 9 und der Stege 11 sind eben (plan) ausgebildet. Zur Erzielung der Winkelcodierung für ein Kraftfahrzeugrad 6 wird das Band 10 um eine Hauptwelle 12 einer Auswuchtmaschine gelegt. Das Band befindet sich hierzu auf einer Kreiszylinderfläche 5 der Hauptwelle 12 der Auswuchtmaschine. Die Hauptwelle 12 ist drehfest mit dem fahrzeugrad 6 verbunden. Dies erfolgt in bekannter Weise durch Befestigungs- und/oder Spannmittel. Bei der Anordnung des Bandes 10 auf der Kreiszylinderfläche 5 passen sich die durchgehenden Materialstreifen 9 des Bandes an die Kreiszylinderfläche 5 an. Die Oberflächen an den Stegen 11, insbesondere die reflektierenden außen oder auch innenliegenden Oberflächen, welche die Reflektoren 2 bilden, behalten ihre ebene (plane) Eigenschaft bei und wirken wie ein Poligonspiegel, zwischen dessen reflektierenden Flächen nicht reflektierende Abschnitte mit in Umfangsrichtung der Kreiszylinderfläche 5 liegen. Hierdurch werden gleiche Winkelabstände zwischen den Reflektoren 2 erreicht. Die nicht reflektierenden Abschnitte zwischen den Reflektoren 2 werden durch entsprechende Materialentfernungen aus dem Band 10 gewonnen, so dass die Stege 11 entstehen. Bei der Anordnung auf der Kreiszylinderfläche 5 erstrecken sich die Stege 11 und die darauf gebildeten Reflektoren 2 in axialer Richtung, d. h. parallel zur Achse 8, um welche die Hauptwelle 12 dreht.

Die Stege können durch sogenanntes Elektroforming hergestellt sein. Hierbei wird das metallische Band mit einem fotoempfindlichen Resist beschichtet und durch anschließende Belichtung mittels einer Maske werden die Strukturen auf den Resist übertragen. Auf der nach dem Entwickeln, resistfreien Flächen erfolgt der Metallaufbau durch galvanische Abscheidung und damit die Formung der Stege.

Man erreicht hierdurch die Anordnung eines Poligonspiegels um die Kreiszylinderfläche der Hauptwelle 12 der Auswuchtmaschine. Bei der Rotation ändert sich die Winkelstellung der jeweiligen Spiegelfläche eines Reflektors 7 zum Emitter 1 und dem wenigstens einen Detektor 3. Der Emitter 1 sendet insbesondere fokussiertes Licht auf die sich drehende Kreiszylinderfläche 5 aus. Das Licht trifft dabei auf die reflektierenden ebenen Flächen der Reflektoren 2. Das von den Reflektoren 2 reflektierte Licht wird vom wenigstens einen Detektor 3 empfangen und dieser erzeugt ein entsprechendes Signal. Dieses wird in einer an den Detektor 3 angeschlossenen Auswerteeinrichtung 4 für eine Drehwinkelerkennung ausgewertet. Die Auswertung der vom Detektor 3 gelieferten Signale kann auch zur Bestimmung der Drehzahl und Drehrichtung des Kraftfahrzeugrades 6 ausgewertet werden.

Um einen absoluten Winkelbezug zum Kraftfahrzeugrad 6 (Hauptwelle 12) zu erhalten, kann der Winkelabstand zwischen zwei Reflektoren 2 von den gleichen Winkelabständen zwischen den übrigen Reflektoren abweichen. Man erreicht hierdurch beispielsweise eine Null-Position, an welcher beispielsweise ein Drehwinkelzähler des Drehwinkelgebers auf Null gesetzt wird.

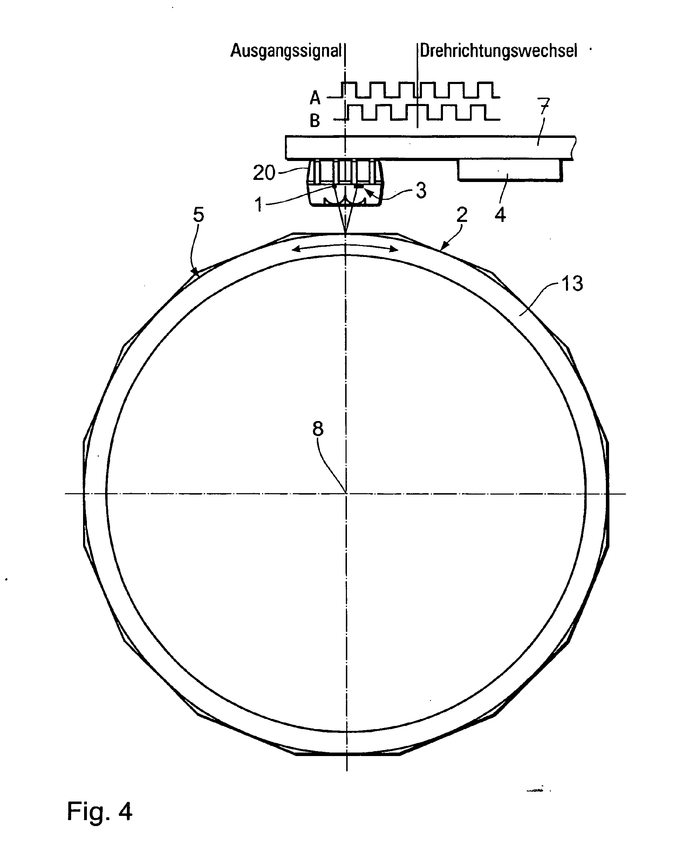

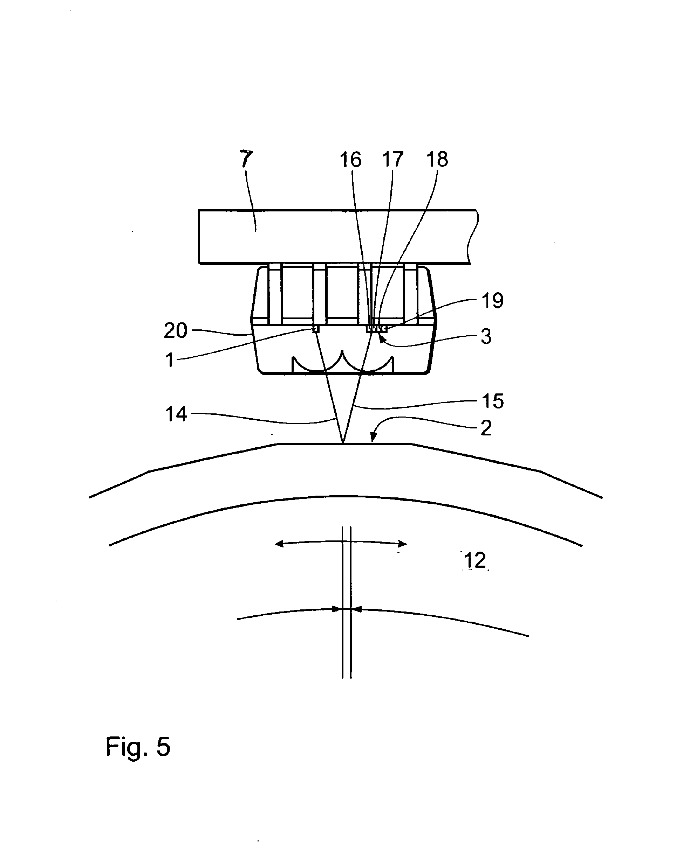

Bei dem in den Figuren 4 und 5 dargestellten Ausführungsbeispiel werden die ebenen Flächen der Reflektoren 2 an der Außenseite eine starren Hülse 13 gebildet. Diese Hülse 13 ist in bevorzugter Weise durch ein Kunststoffspritzteil gebildet. Die Hülse 13 ist beim dargestellten Ausführungsbeispiel der Figuren 4 und 5 auf die Hauptwelle 12 der Auswuchtmaschine aufgesetzt.

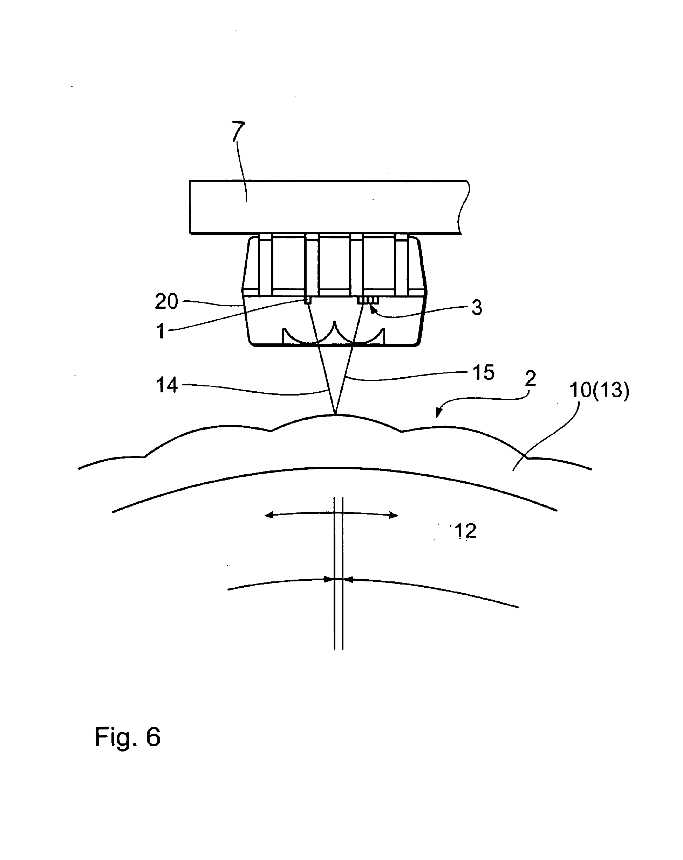

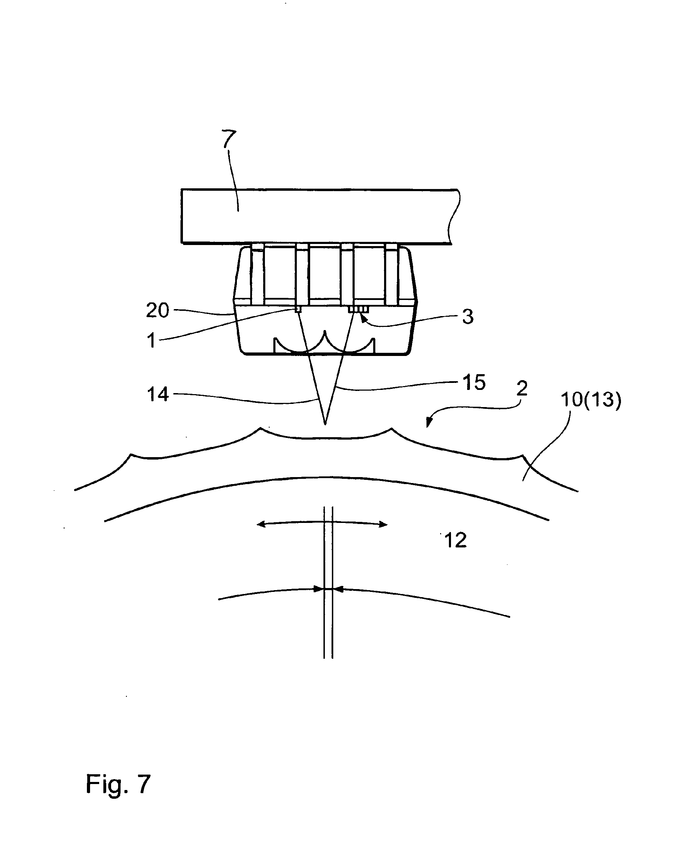

Bei den in den Fig. 6 und 7 dargestellten Ausführungsbeispielen werden die Reflektoren 2 von bezüglich des Emitters 1 bzw. des Detektors 3 konvex gekrümmten Flächenabschnitten (Fig. 6) oder konkav gekrümmten Flächenabschnitten (Fig. 7) gebildet. Die die Reflektoren 2 bildenden Flächenabschnitte können unmittelbar aneinandergereiht auf einem Band 10 oder einem Formteil 13 vorgesehen sein. Mittels einer durchgehenden reflektierenden Beschichtung erreicht man die Reflektoreigenschaft. Da die einzelnen Reflektoren geometrisch an ihren aneinanderstoßenden Kanten voneinander unterscheidbar sind, gewinnt man auch bei durchgehender reflektierender Beschichtung diskrete Flächenabschnitte, welche zur Bestimmung der einzelnen Drehwinkel in der Auswerteeinrichtung ausgewertet werden können.

Der Emitter 1 und der Detektor 3 sind in einer Baueinheit 20 angeordnet. Diese Baueinheit 20 ist zusammen mit der Auswerteeinrichtung 4 auf einer Trägerplatte 7 angeordnet. Der Emitter 1 sendet einen fokussierten Lichtstrahl 14 auf den jeweiligen, dem Bauteil 20 gegenüberliegenden Reflektor 2, wie es im einzelnen auch aus der Figur 6 zu ersehen ist. Bei der Drehung um die Rotationsachse 8 wird ein vom jeweiligen Reflektor 2 reflektierter Strahl 15 in Abhängigkeit von der Drehwinkeländerung mit unterschiedlichen Ablenkwinkeln abgelenkt und trifft auf in Ablenkrichtung nebeneinander angeordnete lichtempfindliche Sensoren 16, 17, 18 und 19, welche am Detektor 3 vorsehen sind (Figur 5). Somit trifft der von einem jeweiligen Reflektor 2 reflektierte Strahl 15 bei Drehung in einer Richtung nacheinander auf die Sensoren 16 bis 19 auf. Der erste Sensor 16 und der dritte Sensor 18 sind mit einem Differenzverstärker verbunden, welcher als Ausgangssignal das in Figur 4 mit A bezeichnete Ausgangssignal liefert. Der zweite Sensor 17 und der vierte Sensor 19 sind mit einem weiteren Differenzverstärker verbunden, welcher ein Ausgangssignal B (Figur 4) liefert. Hierdurch werden die Helligkeitsunterschiede an den jeweiligen Sensoren, während sich eine Spiegelfläche des Reflektors 2 an der Baueinheit 20 vorbei bewegt, ausgewertet.

Wenn sich die Hauptwelle 12 weiterdreht, trifft der reflektierte Lichtstrahl nicht mehr auf die Sensoren. Es trifft jedoch der vom nachfolgenden Reflektor 2 reflektierte Lichtstrahl 15 erneut bei Änderung der Drehwinkelstellung des Rotors nacheinander auf die Sensoren 16 bis 19. In bevorzugter Weise sind 256 Reflektoren 2 am Umfang der Hülse 13 vorgesehen. Der absolute Winkelbezug zur Hauptwelle 12 kann durch eine Unregelmäßigkeit in der Aufteilung der Spiegelflächen um die Achse 8 gewonnen werden. Diese Stelle kann beispielsweise die Null-Stelle des Positionszählers im Drehwinkelgeber sein.

Eine Drehrichtungsumkehr kann dadurch erfasst werden, dass bei einem Zustandswechsel des Ausgangssignals A der momentane Zustand des Ausgangssignals B (Figur 4) ausgewertet wird.

Der Drehwinkelgeber (Inkrementalgeber) der Erfindung ist unempfindliche gegen axiale Verschiebungen. Die Anzahl der Signalleitungen und Endstörfilter kann auf eine jeweilige Anzahl von zwei reduziert werden. Der von den Reflektoren 2 gebildete Polygonspiegel ist, wie erläutert, als relativ dünne Hülse oder Band ausgebildet, welche den Durchmesser der Hauptwelle nur unwesentlich vergrößert. Man erreicht eine raumsparende Anordnung des Drehwinkelgebers.

### [Bezugszeichenliste]

- 1: Emitter
- 2: Reflektor
- 3: Detektor
- 4: Auswerteeinrichtung
- 5: Kreiszylinderfläche
- 6: Kraftfahrzeugrad
- 7: Trägerplatte
- 8: Achse
- 9: Materialstreifen
- 10: Band
- 11: Stege
- 12: Hauptwelle
- 13: Hülse
- 14: emittierter Strahl
- 15: reflektierter Strahl
- 16: Sensor
- 17: Sensor
- 18: Sensor
- 19: Sensor
- 20: Baueinheit

## Patentansprüche

1. Radauswuchtmaschine für ein auszuwuchtendes Kraftfahrzeugrad, welches drehfest mit einer um eine Rotationsachse (8) drehbaren und eine Kreiszylinderfläche (5) aufweisenden Hauptwelle (12) der Radauswuchtmaschine zu verbinden ist, mit einem mit der Hauptwelle (12) verbundenen Drehwinkelgeber, der einen Licht aussendenden Emitter (1) und Drehwinkelinkremente, welche auf einem um die Rotationsachse (8) drehbaren Kreis in gleichen Winkelabständen voneinander angeordnet sind und über welche das vom Emitter ausgesendete Licht einem Detektor (3) zugeleitet wird, aufweist, und mit einer an den Detektor (3) angeschlossenen Auswerteeinrichtung (4), welcheSignale des Detektors (3) für eine Drehwinkelerkennung auswertet, **dadurch gekennzeichnet, dass** die Drehwinkelinkremente als Reflektoren (2) ausgebildet sind, wobei die Reflektoren (2) zu einem flexiblen Band, welches um die Kreiszylinderfläche der Hauptwelle (12) der Radauswuchtmaschine geschlungen ist, miteinander verbunden sind oder an der Außenseite einer starren dünnen Hülse (13), welche auf die Kreiszylinderfläche (5) der Hauptwelle (12) der Radauswuchtmaschine aufgesteckt ist, in unmittelbar aneinandergrenzenden reflektierenden Flächenabschnitten gebildet sind.

2. Radauswuchtmaschine nach Anspruch 1, **dadurch gekennzeichnet, dass** die Reflektoren (2) an parallel zur Achse (8) der Kreiszylinderfläche (5) verlaufenden Flächenabschnitten gebildet sind.

3. Radauswuchtmaschine nach Anspruch 1 oder 2, **dadurch gekennzeichnet, dass** die Flächen der Reflektoren (2) rechteckig oder quadratisch ausgebildet sind.

4. Radauswuchtmaschine nach einem der Ansprüche 1 bis 3, **dadurch gekennzeichnet, dass** die Reflektoren (2) von Flächenabschnitten gebildet sind, die von einer Kreiszylinderfläche abweichen

5. Radauswuchtmaschine nach einem der Ansprüche 1 bis 4, **dadurch gekennzeichnet, dass** die Reflektoren (2) von ebenen Flächen gebildet sind

6. Radauswuchtmaschine nach einem der Ansprüche 1 bis 5, **dadurch gekennzeichnet, dass** das. Schnittbild der Reflektoren (2) in einer zur Rotationsachse (8) senkrechten Ebene ein Polygon ist.

7. Radauswuchtmaschine nach Anspruch 6, **dadurch gekennzeichnet, dass** das Polygon gleiche Polygonseiten aufweist

8. Radauswuchtmaschine nach einem der Ansprüche 1 bis 3, **dadurch gekennzeichnet, dass** die Reflektoren (2) von Zylinderflächenabschnitten, insbesondere Kreiszylinderflächenabschnitten gebildet sind, deren Zylinderachsen parallel zur Rotationsachse (8) verlaufen.

9. Radauswuchtmaschine nach Anspruch 8, **dadurch gekennzeichnet, dass** der Radius eines jeweiligen Kreiszylinderflächenabschnittes zwischen unendlich (plan) und dem Radius der Kreisbahn liegt, auf welcher die Reflektoren (2) rotieren.

10. Radauswuchtmaschine nach einem der Ansprüche 1 bis 9, **dadurch gekennzeichnet, dass** die die Reflektoren (2) bildenden Flächenabschnitte bezüglich des Emitters (1) bzw. des Detektors (3) einen konvexen oder konkaven Verlauf jeweils aufweisen.

11. Radauswuchtmaschine nach einem der Ansprüche 1 bis 10, **dadurch gekennzeichnet, dass** die Reflektoren (2) an Stegen (11), die zwischen zwei auf der Kreiszylinderfläche (5) aufliegenden Materialstreifen (9) angeordnet sind, gebildet sind und mit den Materialstreifen (9) einstückig zu einem Band (10) verbunden sind.

12. Radauswuchtmaschine nach Anspruch 1 oder 11, **dadurch gekennzeichnet, dass** das Band (10) aus Kunststoff besteht und zumindest im Bereich der Reflektoren (2) bzw. Stege (11) reflektierend ausgebildet ist.

13. Radauswuchtmaschine nach einem der Ansprüche 1 bis 12, **dadurch gekennzeichnet, dass** das Band (10) aus Metall, insbesondere Hart-Nickel besteht.

14. Radauswuchtmaschine nach einem der Ansprüche 11 bis 13, **dadurch gekennzeichnet, dass** die Stege (11) durch Materialentfernen aus dem ebene Flächen aufweisenden Band (10) gebildet sind.

15. Radauswuchtmaschine nach Anspruch 14, **dadurch gekennzeichnet, dass** die Stege durch Electroforming hergestellt sind.

16. Radauswuchtmaschine nach Anspruch 1, **dadurch gekennzeichnet, dass** die Hülse (13) aus Kunststoff besteht.

17. Radauswuchtmaschine nach Anspruch 1, **dadurch gekennzeichnet, dass** die Hülse (13) ein Kunststoffspritzteil ist.

18. Radauswuchtmaschine nach einem der Ansprüche 1 bis 17, **dadurch gekennzeichnet, dass** der auf die jeweiligen Reflektoren (2) emittierte Strahl (14) fokussiert ist.

19. Radauswuchtmaschine nach einem der Ansprüche 1 bis 18, **dadurch gekennzeichnet, dass** der von einem jeweiligen Reflektor (2) reflektierte Strahl (15) von mehreren lichtempfindlichen Sensoren (16-19) während der Rotordrehung empfangen wird.

20. Radauswuchtmaschine 19, **dadurch gekennzeichnet, dass** die Sensoren (16-19) im wesentlichen in Drehrichtung nebeneinander angeordnet sind.

21. Radauswuchtmaschine nach Anspruch 19 oder 20, **dadurch gekennzeichnet, dass** der von einem jeweiligen Reflektor (2)reflektierte Strahl (15) bei Drehung in einer Richtung nacheinander auf die Sensoren (16-19) auftrifft.

22. Radauswuchtmaschine nach einem der Ansprüche 19 bis 21, **dadurch gekennzeichnet, dass** vier lichtempfindliche Sensoren (16, 17, 18, 19) in Drehrichtung nebeneinander angeordnet sind, und dass mit den lichtempfindlichen Sensoren (16, 17, 1.8, 19) Differenzverstärker verbunden sind, welche Helligkeitsunterschiede zwischen dem ersten Sensor (16) und dem dritten Sensor (18) sowie dem zweiten Sensor (17) und dem vierten Sensor (19)auswerten.

23. Radauswuchtmaschine nach einem der Ansprüche 1 bis 22, **dadurch gekennzeichnet; dass** zwischen wenigstens zwei entlang der Kreiszylinderfläche (5) angeordneten Reflektoren (2) ein von den übrigen gleichen Winkelabständen abweichender Winkelabstand vorgesehen ist.

## Claims

1. A wheel balancing machine for a motor vehicle wheel to be balanced which is to be connected non-rotatably to a main shaft (12) of the wheel balancing machine, which main shaft is rotatable about an axis of rotation (8) and has a circular-cylindrical surface (5), comprising a rotary angle sensor which is connected to the main shaft (12) and which has a light-emitting emitter (1) and rotary angle increments which are arranged at equal angular spacings from each other on a circle rotatable about the axis of rotation (8) and by way of which the light emitted by the emitter is passed to a detector (3), and further comprising an evaluation device (4) which is connected to the detector (3) and which evaluates signals from the detector (3) for rotary angle detection, **characterised in that** the rotary angle increments are in the form of reflectors (2), wherein the reflectors (2) are connected together to provide a flexible band passed around the circular-cylindrical surface of the main shaft (12) of the wheel balancing machine or are formed at the outside of a rigid thin sleeve (13) fitted onto the circular-cylindrical surface (5) of the main shaft (12) of the wheel balancing machine in immediately mutually adjoining reflecting surface portions.

2. A wheel balancing machine according to claim 1 **characterised in that** the reflectors (2) are formed at surface portions extending in parallel relationship with the axis (8) of the circular-cylindrical surface (5).

3. A wheel balancing machine according to claim 1 or claim 2 **characterised in that** the surfaces of the reflectors (2) are rectangular or square.

4. A wheel balancing machine according to one of claims 1 to 3 **characterised in that** the reflectors (2) are formed by surface portions which deviate from a circular-cylindrical surface.

5. A wheel balancing machine according to one of claims 1 to 4 **characterised in that** the reflectors (2) are formed by flat surfaces.

6. A wheel balancing machine according to one of claims 1 to 5 **characterised in that** the sectional view of the reflectors (2) in a plane perpendicular to the axis of rotation (8) is a polygon.

7. A wheel balancing machine according to claim 6 **characterised in that** the polygon has equal sides.

8. A wheel balancing machine according to one of claims 1 to 3 **characterised in that** the reflectors (2) are formed by cylindrical surface portions, in particular circular-cylindrical surface portions, the cylinder axes of which extend in parallel relationship with the axis of rotation (8).

9. A wheel balancing machine according to claim 8 **characterised in that** the radius of a respective circular-cylindrical surface portion is between infinite (flat) and the radius of the circular path on which the reflectors (2) rotate.

10. A wheel balancing machine according to one of claims 1 to 9 **characterised in that** the surface portions forming the reflectors (2) are each of a convex or concave configuration with respect to the emitter (1) or the detector (3).

11. A wheel balancing machine according to one of claims 1 to 10 **characterised in that** the reflectors (2) are formed on lands (11) arranged between two material strips (9) lying on the circular-cylindrical surface (5), and are integrally connected to the material strips (9) to provide a band (10).

12. A wheel balancing machine according to claim 1 or claim 11 **characterised in that** the band (10) comprises plastic material and is reflective at least in the region of the reflectors (2) or lands (11) respectively.

13. A wheel balancing machine according to one of claims 1 to 12 **characterized in that** the band (10) comprises metal, in particular hard nickel.

14. A wheel balancing machine according to one of claims 11 to 13 **characterised in that** the lands (11) are formed by material removal from the band (10) having flat surfaces.

15. A wheel balancing machine according to claim 14 **characterised in that** the lands are produced by electroforming.

16. A wheel balancing machine according to claim 1 **characterised in that** sleeve (13) comprises plastic material.

17. A wheel balancing machine according to claim 1 **characterised in that** the sleeve (13) is a plastic injection moulding.

18. A wheel balancing machine according to one of claims 1 to 17 **characterised in that** the beam (14) emitted onto the respective reflectors (2) is focused.

19. A wheel balancing machine according to one of claims 1 to 18 **characterised in that** the beam (15) reflected by a respective reflector (2) is received by a plurality of light-sensitive sensors (16-19) during rotation of the rotary member.

20. A wheel balancing machine according to claim 19 **characterised in that** the sensors (16-19) are substantially arranged in mutually juxtaposed relationship in the direction of rotation.

21. A wheel balancing machine according to claim 19 or claim 20 **characterised in that** the beam (15) reflected by a respective reflector (2) impinges successively on the sensors (16-19) upon rotation in one direction.

22. A wheel balancing machine according to one of claims 19 to 21 **characterised in that** four light-sensitive sensors (16, 17, 18, 19) are arranged in mutually juxtaposed relationship in the direction of rotation and that connected to the light-sensitive sensors (16, 17, 18, 19) are differential amplifiers which evaluate differences in brightness between the first sensor (16) and the third sensor (18) as well as the second sensor (17) and the fourth sensor (19).

23. A wheel balancing machine according to one of claims 1 to 22 **characterised in that** an angular spacing differing from the other equal angular spacings is provided between at least two reflectors (2) which are arranged along the circular-cylindrical surface (5).

## Revendications

1. Machine d'équilibrage de roue pour une roue de véhicule automobile à équilibrer qui doit être raccordée, bloquée en rotation, à un arbre principal (12) de la machine d'équilibrage de roue pouvant tourner autour d'un axe de rotation (8) et présentant une surface cylindrique circulaire (5), avec un codeur angulaire, raccordé à l'arbre principal (12), qui présente un émetteur (1) émettant de la lumière et des incréments angulaires qui sont disposés, à intervalles angulaires égaux les uns par rapport aux autres, sur un cercle pouvant tourner autour de l'axe de rotation (8), et par le biais desquels la lumière émise par l'émetteur est conduite à un détecteur (3), et avec un équipement d'analyse (4) connecté au détecteur (3) qui analyse des signaux du détecteur (3) pour une détection angulaire, **caractérisée en ce que** les incréments angulaires sont constitués en tant que réflecteurs (2), les réflecteurs (2) étant raccordés les uns aux autres pour former un ruban flexible qui entoure la surface cylindrique circulaire de l'arbre principal (12) de la machine d'équilibrage de roue, ou étant formés, dans des segments de surface réfléchissants directement contigus, sur le côté extérieur d'une douille (13) mince rigide qui est enfilée sur la surface cylindrique circulaire (5) de l'arbre principal (12) de la machine d'équilibrage de roue.

2. Machine d'équilibrage de roue selon la revendication 1, **caractérisée en ce que** les réflecteurs (2) sont formés sur des segments de surface disposés parallèlement à l'axe (8) de la surface cylindrique circulaire (5).

3. Machine d'équilibrage de roue selon la revendication 1 ou 2, **caractérisée en ce que** les surfaces des réflecteurs (2) sont rectangulaires ou carrées.

4. Machine d'équilibrage de roue selon une des revendications 1 à 3, **caractérisée en ce que** les réflecteurs (2) sont formés de segments de surface qui diffèrent d'une surface cylindrique circulaire.

5. Machine d'équilibrage de roue selon une des revendications 1 à 4, **caractérisée en ce que** les réflecteurs (2) sont formés de surfaces planes.

6. Machine d'équilibrage de roue selon une des revendications 1 à 5, **caractérisée en ce que** la vue en coupe des réflecteurs (2) dans un plan perpendiculaire à l'axe de rotation (8) est un polygone.

7. Machine d'équilibrage de roue selon la revendication 6, **caractérisée en ce que** le polygone a des côtés de polygone égaux.

8. Machine d'équilibrage de roue selon une des revendications 1 à 3, **caractérisée en ce que** les réflecteurs (2) sont formés de segments de surface cylindrique, en particulier de segments de surface cylindrique circulaire, dont les axes de cylindre sont parallèles à l'axe de rotation (8).

9. Machine d'équilibrage de roue selon la revendication 8, **caractérisée en ce que** le rayon d'un segment respectif de surface cylindrique circulaire est compris entre l'infini (plan) et le rayon de la trajectoire circulaire sur laquelle tournent les réflecteurs (2).

10. Machine d'équilibrage de roue selon une des revendications 1 à 9, **caractérisée en ce que** les segments de surface formant les réflecteurs (2) sont respectivement, en ce qui concerne l'émetteur (1) ou le détecteur (3), convexes ou concaves.

11. Machine d'équilibrage de roue selon une des revendications 1 à 10, **caractérisée en ce que** les réflecteurs (2) sont formés sur des entretoises (11) qui sont disposées entre deux bandes de matériau (9) placées sur la surface cylindrique circulaire (5) et sont raccordés d'un seul tenant avec les bandes de matériau (9) pour former un ruban (10).

12. Machine d'équilibrage de roue selon la revendication 1 ou 11, **caractérisée en ce que** le ruban (10) est réalisé en matière plastique et est constitué de façon réfléchissante au moins dans la zone des réflecteurs (2) ou des entretoises (11).

13. Machine d'équilibrage de roue selon une des revendications 1 à 12, **caractérisée en ce que** le ruban (10) est en métal, en particulier en nickel dur.

14. Machine d'équilibrage de roue selon une des revendications 11 à 13, **caractérisée en ce que** les entretoises (11) sont formées par enlèvement de matière à partir du ruban (10) présentant des surfaces planes.

15. Machine d'équilibrage de roue selon la revendication 14, **caractérisée en ce que** les entretoises sont fabriquées par électroformage.

16. Machine d'équilibrage de roue selon la revendication 1, **caractérisée en ce que** la douille (13) est en matière plastique.

17. Machine d'équilibrage de roue selon la revendication 1, **caractérisée en ce que** la douille (13) est une pièce en matière plastique réalisée par injection.

18. Machine d'équilibrage de roue selon une des revendications 1 à 17, **caractérisée en ce que** le rayonnement (14) émis sur les réflecteurs (2) respectifs est focalisé.

19. Machine d'équilibrage de roue selon une des revendications 1 à 18, **caractérisée en ce que** le rayonnement (15) réfléchi par un réflecteur (2) respectif est reçu par plusieurs capteurs (16-19) sensibles à la lumière pendant la rotation du rotor.

20. Machine d'équilibrage de roue selon la revendication 19, **caractérisée en ce que** les capteurs (16-19) sont essentiellement disposés les uns à côté des autres dans le sens de rotation.

21. Machine d'équilibrage de roue selon la revendication 19 ou 20, **caractérisée en ce que** le rayonnement (15) réfléchi par un réflecteur (2) respectif arrive sur les capteurs (16-19) les uns après les autres lors de la rotation dans un sens.

22. Machine d'équilibrage de roue selon une des revendications 19 à 21, **caractérisée en ce que** quatre capteurs (16, 17, 18, 19) sensibles à la lumière sont disposés les uns à côté des autres dans le sens de rotation, et **en ce que** des amplificateurs différentiels sont connectés aux capteurs (16, 17, 18, 19) sensibles à la lumière et analysent des différences de luminosité entre le premier capteur (16) et le troisième capteur (18), ainsi qu'entre le deuxième capteur (17) et le quatrième capteur (19).

23. Machine d'équilibrage de roue selon une des revendications 1 à 22, **caractérisée en ce que**, entre au moins deux réflecteurs (2) disposés le long de la surface cylindrique circulaire (5), il est prévu un intervalle angulaire différent des autres intervalles angulaires égaux.
